# EUROPEAN PATENT SPECIFICATION

(11) **EP 0 728 413 B1**
(45) Date of publication and mention of the grant of the patent: **22.05.2002**
(21) Application number: 96200448.7
(22) Date of filing: 21.02.1996
(51) Int. Cl.: A01K 1/12, A01K 1/015, A01K 1/01, A01J 5/017

(54) **A construction including an implement for milking animals**
Konstruktion mit einem Gerät zum Melken von Tieren
Construction avec dispositif pour la traite d'animaux

(30) Priority: 24.02.1995 NL 9500363; 04.10.1995 NL 1001336
(43) Date of publication of application: 28.08.1996
(60) Divisional application: 01201815.6
(73) Proprietor: MAASLAND N.V., 3155 PD Maasland (NL)
(72) Inventor: van der Lely, Cornelis, 6300 Zug (CH)
(74) Representative: Corten, Maurice Jean F.M.

(56) References cited:
- EP-A- 0 194 730
- EP-A- 0 567 191
- EP-A- 0 595 409
- WO-A-94/15452
- DE-A- 1 757 360

## Description

The invention relates to a construction including an implement for milking animals, such as cows, provided with a milk box, according to the preamble of claim 1.

Such a construction is known, e.g. from EP-A-0194730. This known construction comprises an endless belt supported by a number of rollers adapted to rotate about horizontal shafts so as to keep the animal in action (moving).

Cows do not always desire to enter the milking box without delay. Therefore, it is of advantage to improve the situations so that the cows can be milked without problems.

The invention aims at obtaining an alternative construction in which drawbacks do not occur or at least are limited to a considerable extent.

According to the invention, this is achieved by a construction of the sort as described above which is characterized in that said floor comprises a flexible floor provided with hollow spaces, said hollow spaces being constituted by recesses at the lower side of the flexible floor. The recesses in the flexible floor procure a relative elasticity so that, when an animal puts its legs on the flexible floor, a large part of the forces that would be exercised otherwise on the joints of the legs and hips of the animal, are absorbed by the flexible floor. Furthermore, such a flexible floor also has an insulation function so that coldness of the soil is transferred less quickly to the legs.

In an embodiment according to the invention, the flexible floor is made of rubber or synthetic material.

For the purpose of supporting the flexible floor sufficiently, the latter, according to a further inventive feature, is preferably supported against a metal plate. In order to prevent the flexible floor from moving relative to the floor, according to again another inventive feature the metal plate is surrounded by a frame.

For the purpose of preventing the animals from staying away from the milk box because the latter is contaminated by e.g. dung or mud, according to an inventive feature the milk box comprises a floor of which at least part of the surface is movable horizontally and downwardly. According to an inventive feature, the movable part of the floor comprises a flexible, motor drivable conveyer. In a preferred embodiment according to the invention, the conveyer extends over the entire length and width of the milk box.

After an animal has left the milk box, which can be ascertained e.g. by means of the cow identification system, according to a further inventive feature, the floor surface is moved, preferably by a computer supplying a signal to the motor for putting the conveyor into operation when the milk box is empty, so that the next animal to occupy the milk box will always avail of a clean floor.

According to a further inventive feature, contaminations that might be present on the movable floor, such as dung, urine, mud, etc., are collected in a drain provided at one end of the movable floor. For the purpose of removing also contaminations that are relatively difficulty removable from the floor surface, according to a further inventive feature, near the end where the drain is situated, there is provided a scraper for removing the contaminations from the floor surface. In a preferred embodiment according to the invention, the scraper is designed as a motor drivable auger.

According to a further inventive feature, the construction comprises a drinking trough, which is provided with a mixing device by means of which e.g. treacle can be added to the drinking-water. According to again a further inventive feature, the construction comprises a fodder trough including a mixing device by means of which a substance, such as treacle, can be added to the concentrate.

According to an other inventive feature, the construction comprises a spraying device by means of which warm water is sprayed against the animal's legs. After the animal's legs have been cleaned by means of the spraying device, according to an other inventive feature, the legs are dried with the aid of a ventilator blowing warm air thereagainst. As it has appeared in practice, this is experienced by the animals as very pleasant and enables a very hygienic way of working in the milk box which, finally, has a positive influence on the quality of the milk and the health of the animals.

According to an other inventive feature, the construction comprises one or more sensors for the purpose of determining the animal's behaviour in a milk box. According to a further inventive feature, the sensors are provided on the milk box. According to an other inventive feature, the sensor includes an activity meter by means of which e.g. heat of the cow can be ascertained.

In a preferred embodiment according to the invention, the milk box comprises a medical instrument adapted to be folded in, by means of which the heartbeat, the temperature, the blood pressure, etc. of an animal can be measured in the milk box and supplied to a computer. With the aid of the aforementioned parameters, the physical state of each animal can be kept up to date in the computer. When a parameter measured by the medical instrument deviates from an average value inputted in the computer for the aforementioned parameters, then the farmer's attention is drawn thereto by means of e.g. a print-out of the computer. A deviation from the above-mentioned parameters can be an indication for the farmer that an animal is ill or on heat.

According to again an other inventive feature, the milk box comprises one or more sensors, by means of which the physical state of the animal's legs is determined. The sensor may be designed as a temperature meter, an ultrasound scan, an X-ray machine, etc.

According to a further inventive feature, the implement includes a milking robot for automatically connecting the teat cups to the teats of an animal to be milked in the milk box.

The invention also relates to stable or cowshed comprising a cubicle having a flexible floor.

Such a stable or cowshed is known from WO 94/15452.

According to the invention an alternative stable or cowshed is provided which is characterized in that the flexible floor is provided with hollow spaces, said hollow spaces being constituted by recesses at the lower side of the flexible floor.

For a better understanding of the invention and to show how the same may be carried into effect, reference will now be made, by way of example, to the accompanying drawings, in which:
Figure 1 shows, in plan view, a construction including an implement for milking animals, provided with a milk box;
Figure 2 shows a side view of the milk box in Figure 1;
Figure 3 shows a plan view of the milk box according to Figure 2;
Figure 4 is an enlarged view of a detail of the floor of the milk box according to Figure 2;
Figure 5 is an enlarged view of a couple of cubicles according to Figure 1, provided with a flexible floor;
Figure 6 shows a rear view of the flexible floors according to the line VI-VI in Figure 5, and
Figure 7 is an enlarged view of a detail of the fastening of the flexible floors in the cubicles.

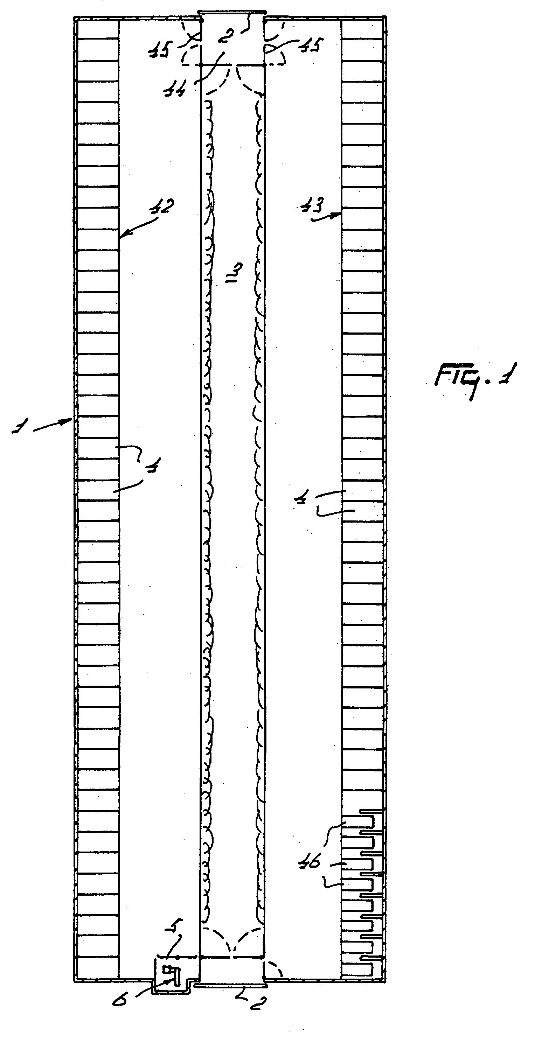

Figure 1 shows, in plan view, a construction including an implement for milking animals provided with a stable or cowshed 1, entrance doors 2, a feed alley 3 and, on both sides, a row of cubicles 4. In the cowshed 1, there is provided at one end, near an entrance door 2, a milk box 5 in which there is schematically indicated a milking robot 6 by means of which the teat cups can be connected automatically, in a usual manner, to the teats of an animal to be milked.

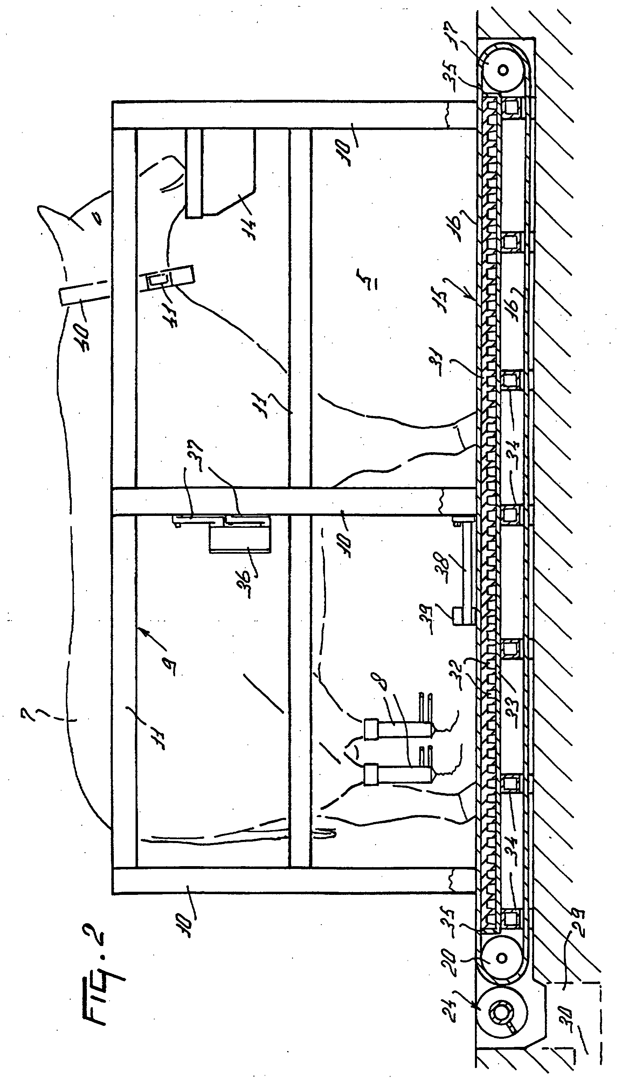

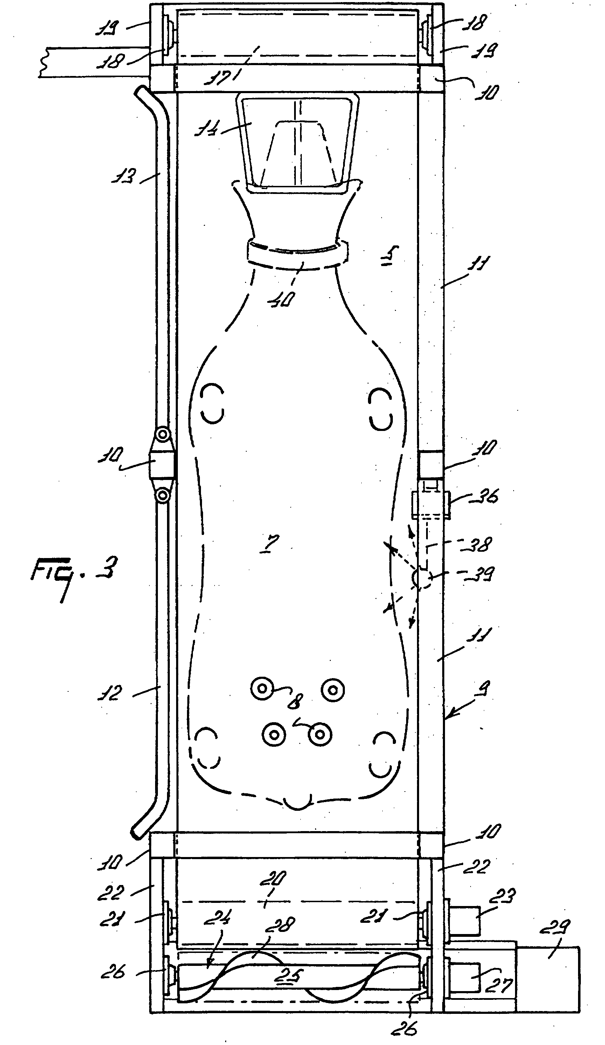

Figure 2 shows, in side view, the milk box 5 according to Figure 1, occupied by a cow 7 whose teats are connected to the teat cups 8. The milk box 5 comprises a fencing 9 including stands 10 interconnected by means of crossbeams 11. As is shown in Figure 3, the milk box 5 is provided at one longitudinal side with an entrance door 12 and an exit door 13. Moreover, at the front side of the milk box 5 there is provided a trough 14 on a crossbeam of the fencing 9, which trough can be used as a drinking or feeding trough for the animal. In addition, the trough 14 is provided with a (non-shown) mixing device by means of which a lure substance, such as treacle, can be added to the fodder or the drinking-water.

Furthermore, the milk box 5 is provided with a floor 15 comprising a conveyer 16 extending over the entire length and widt of the milk box. The conveyer 16 is preferably made of a flexible material, such as synthetic material or rubber. Near the front side of the milk box, the conveyer 16 is disposed about a cylindrical roller element 17, which at both ends is bearing-supported in bearings 18 provided in strips 19. The latter strips are each connected with a foremost stand 10 of the fencing 9 (Figure 3). The cylindrical roller element 17, as is shown in Figures 2 and 3, is disposed outside the milk box 5 and below the level of the floor surface of the milk box 5. At the rear side of the milk box 5, there is also provided a cylindrical roller element 20, which on both sides is bearing-supported in bearings 21 provided in strips 22. The latter strips are connected with the rearmost stands 10 of the fencing 9. The conveyer 16 is also disposed about the rearmost roller element 20, which is motor drivable by means of an electromotor 23 provided on the strip 22.

Near the rearmost roller element 20, there is furthermore provided a scraper 24 for the purpose of removing contaminations that might be present on the conveyer 16, such as dung, mud, etc. The scraper 24 comprises an auger 25, which at its two ends is bearing-supported rotatably in bearings 26 provided in the strips 22. The auger 25 is motor drivable by means of an electromotor 27 provided on a strip 22. The auger 25 is arranged at such a distance from the roller element 20 that the comb 28 of the auger moves just along the surface of the conveyer 16. Below the scraper 24, there is furthermore provided a drain 29 which, via a discharge pipe 30, is in communication with a (non-shown) dung cellar.

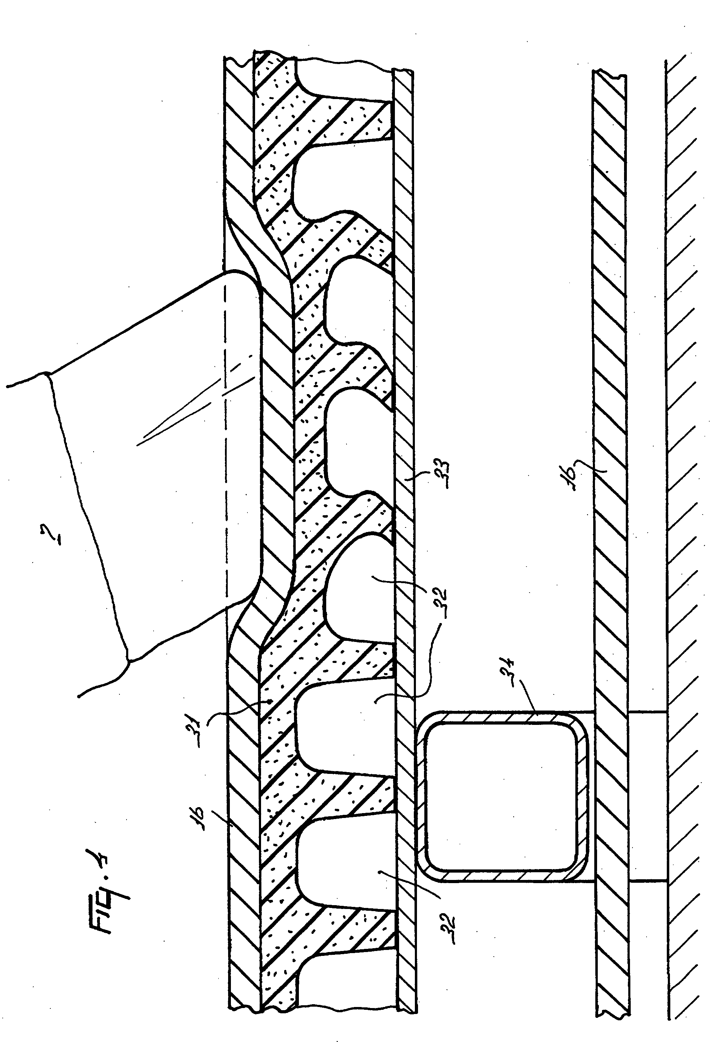

In the milk box 5, below the conveyer 16, there is additionally provided a flexible floor 31 made of synthetic material and provided at the underside with U-shaped recesses 32 (Figure 4). It will be obvious that the flexible floor may also be made of an other type of material, such as rubber. The flexible floor 31 is supported against a metal plate 33 supported by box girders 34. In order to prevent the flexible floor 31 from shifting relative to the metal plate 33, the latter plate is surrounded by a frame 35.

On the middle stand 10 of a longitudinal side of the milk box 5, there is furthermore provided a medical instrument 36, by means of which the heartbeat, the temperature, the blood pressure, etc. of the cow 7 in the milk box 5 can be measured and supplied to a (non-shown) computer. The medical instrument 36 can be pivoted against the body of the cow 7 about a vertical shaft 37 including a (non-shown) cylinder.

On the middle vertical stand 10, near its lower side, there is provided a horizontal strip 38 including at the end a sensor 39 rotatable about a vertical shaft, by means of which the physical state of the animal's legs is determined. The sensor 39 may be designed as an X-ray machine, an infrared camera, an ultrasound scan, etc. The signal supplied by the sensor 39 is processed in the (non-shown) computer. Moreover, the above-described construction comprises a (non-shown) animal identification system by means of which the identity can be established of an animal having occupied the milk box 5. For that purpose each animal is provided with a collar 40 including a transponder 41. By means of the animal identification system, the data supplied by the medical instrument 36 and the sensor 39 and processed in the computer are kept up to date per animal. By means of the animal identification system there is also ascertained whether or not an animal has left the milk box 5, whereafter the computer supplies a signal to the electromotor 23 and 27, so that the conveyer 16 is put into operation and, by means of the scraper 24, contaminations that might be present on the conveyer are removed. In this way, the next animal to enter the milk box 5 will avail of a clean floor.

Moreover, the milk box 5 may be provided with a spraying device by means of which warm water can be sprayed against the animal's legs, as well as with a ventilator by means of which, after the cleaning of the legs has finished, warm air is blown against the animal's legs.

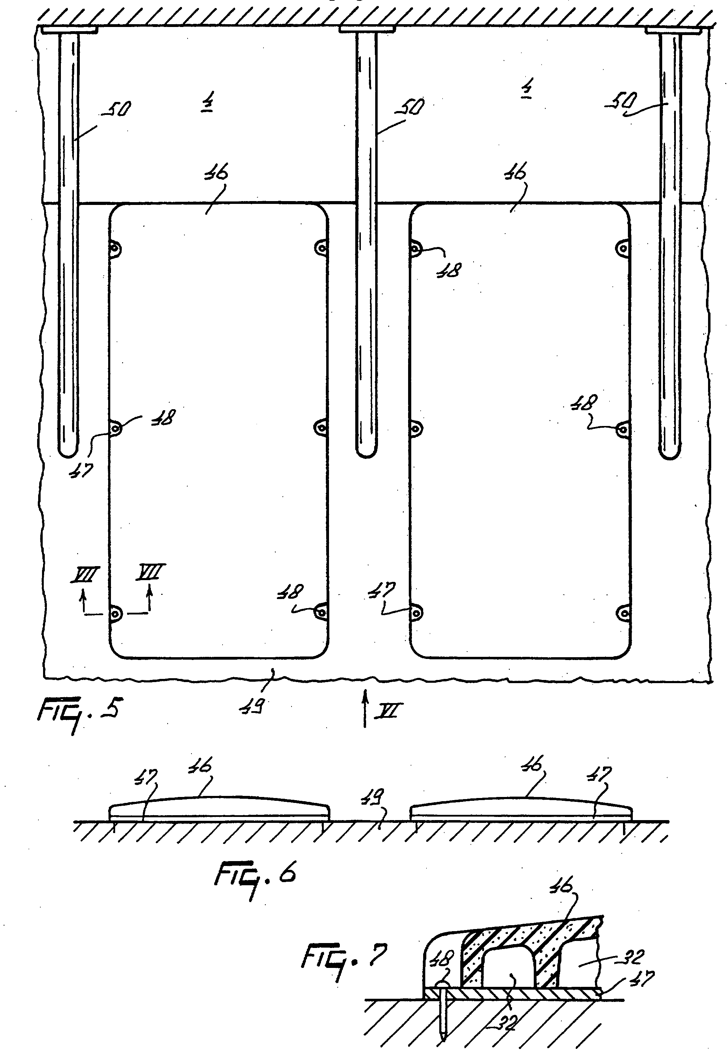

As is shown in Figure 1, the cowshed 1 comprises cubicles 4 on both longitudinal sides. The first row of cubicles 42 is separated from the second row of cubicles 43 by a feed alley 3. At one end of the feed alley 3 there is a passage 44 connecting the first row of cubicles 42 with the second one 43. The passage 44 is provided with computer controlled doors 45. Each of the cubicles 4 includes a flexible floor 46 made of synthetic material or rubber and provided at the lower side with U-shaped recesses 32 (Figure 7). As is shown in Figure 6, near the centre the flexible floors 46 are higher than near the edges. Said flexible floors are supported against a metal plate 47 which is disposed on the floor 49 of the cowshed 1 by means of six wire nails 48 (Figure 5). Furthermore, the flexible floors 46 are glued to the metal plate 47. In addition, between two juxtaposed cubicles 4 there is provided a U-shaped tube 50, which is attached with its end to the wall of the cowshed 1 and extends approximately until halfway the length of the cubicle 4.

The function of the above-mentioned construction including the implement for milking animals will be explained in what follows.

The cowshed 1 is adapted to accomodate a group of cows and to milk same automatically by means of the milking robot 6. After having taken bulkage from the feed alley 3, the animals wish to ruminate same and then, in general, assume a horizontal position. The cubicles 4 being provided with flexible floors, they constitute ideal places for the cows to retire and ruminate. Lured by the comfort of the cubicles 4, which, for lying down, is more or less comparable to that of a meadow, the animals looking for a place to lie on will rather choose the cubicles 4 than the relatively hard and cold concrete floor of the cowshed 1. A further advantage is that the flexible floors 46 have an insulating function so that little warmth is withdrawn from the animal's body and consequently the risk of getting stiff joints and catching a cold is reduced.

After some time, a large number of the animals present in the cowshed 1, by means of a natural stimulus or habituation, will feel the need to enter the milk box 5 and let themselves be milked automatically by the milking robot 6. After an animal has occupied the milk box 5, there will be supplied concentrate to the animal in the trough 14 by means of a (non-shown) concentrate dosage system. However, it has appeared in practice that, in spite of the fact that there is supplied concentrate to the animals in the milk box 5, a number of animals is less inclined to enter said milk box. For the purpose of luring also these animals to the milk box 5, in the trough 14 there is not only supplied concentrate but, via a (non-shown) mixing device, there is added thereto a lure substance, in the present embodiment constituted by treacle. It has appeared that the animals react very positively thereon and that also animals that did not or not regularly visit the milk box 5, lured by the lure substance, start visiting the milk box 5 more frequently.

Before the animal is milked by means of the milking robot 6, it is identified by a (non-shown) animal identification system by means of the transponder 41. During milking, the heartbeat, the blood pressure and the temperature of the animal are measured by means of the medical instrument 36 and compared with the average value inputted beforehand per animal and per parameter. When one of the aforementioned parameters deviates too much from the average value, this is stated on an attention list, in order to enable the farmer to inspect the animal or to consult the veterinary. Moreover, by means of the sensor 39 the physical state of the animal's legs is measured and, when the latter show a defect, this is also stated on the attention list. After the milking of the animal has finished and the teat cups 8 have been disconnected, the exit door 13 is opened and the animal can leave the milk box 5. Whether or not the animal has left the milk box is ascertained by means of the animal identification system. When the milk box 5 is empty, the computer supplies a signal to the electromotors 23 and 27, so that the conveyer 16 and the auger 25 are put into operation. Then, the surface of the conveyer 16 is cleaned by means of the auger 25 so that, when another animal occupies the milk box 5, the floor thereof is clean. Due to the fact that below the conveyer 16 there is provided a flexible floor 31, the floor of the milk box 5 is relatively soft. In practice it has appeared that the animals experience this as very pleasant and are more inclined to enter the milk box 5. The risk for the animals of sustaining injuries of their legs in the relatively small space of the milk box 5 is reduced to a considerable extent as a consequence of the relatively soft floor.

The invention is not restricted to the aforementioned description, but also relates to all the details of the drawings.

## Claims

1. A construction including an implement for milking animals, such as cows, provided with a milk box (2) and a milking robot (6) to automatically connect the teat cups, the milk box (2) comprising a floor (15), **characterized in that** said floor (15) comprises a flexible floor (31) provided with hollow spaces (32), said hollow spaces (32) being constituted by recesses at the lower side of the flexible floor (31).

2. A construction as claimed in claim 1, **characterized in that** the flexible floor (31) is made of rubber or synthetic material.

3. A construction as claimed in claim 1 or 2, **characterized in that** the flexible floor (31) is supported against a metal plate (33).

4. A construction as claimed in claim 3, **characterized in that** the metal plate (33) is surrounded by a frame (35).

5. A construction as claimed in any one of the preceding claims, **characterized in that** at least part of the floor (15) is movable horizontally and downwardly.

6. A construction as claimed in claim 5, **characterized in that** the movable part of the floor (15) comprises a flexible, motor drivable conveyer (16).

7. A construction as claimed in claim 6, **characterized in that** the conveyer (16) extends over the entire length and width of the milk box (2).

8. A construction as claimed in any one of the preceding claims, **characterized in that** it comprises a cow identification system for determining the presence or absence of an animal on the floor (15).

9. A construction as claimed in claims 6 and 8, **characterized in that** a computer is present for supplying a signal to the motor for putting the conveyor into operation when the milk box (2) is empty.

10. A construction as claimed in claim 5, 6, 7 or 9, **characterized in that** at one end of the movable floor (15) there is provided a drain (29), in which there can be collected contaminations, such as dung and urine, that might be present on the movable floor (15).

11. A construction as claimed in claim 10, **characterized in that** near the end where the drain (29) is situated, the movable floor (15) is provided with a scraper (24) for the purpose of removing contaminations present on the floor (15).

12. A construction as claimed in claim 11, **characterized in that** the scraper (24) is designed as a motor drivable auger.

13. A construction as claimed in any one of the preceding claims, said construction comprising a drinking trough (14), **characterized in that** the drinking trough (14) comprises a mixing device, by means of which e.g. treacle can be added to the drinking-water.

14. A construction as claimed in any one of the preceding claims, said construction comprising a fodder trough, **characterized in that** said fodder trough including a mixing device, by means of which a substance, such as treacle, can be added to the concentrate.

15. A construction as claimed in any one of the preceding claims, **characterized in that** the construction comprises a spraying device, with the aid of which warm water is sprayed against the animal's legs.

16. A construction as claimed in any one of the preceding claims, **characterized in that** the construction comprises a ventilator, by means of which warm air can be blown against the animal's legs.

17. A construction as claimed in any one of the preceding claims, **characterized in that** the construction comprises one or more sensors for the purpose of determining the animal's behaviour in the milk box.

18. A construction as claimed in claim 17, **characterized in that** the sensor(s) is/are provided on the milk box (2).

19. A construction as claimed in claim 17 or 18, **characterized in that** the sensor includes an activity meter.

20. A construction as claimed in any one of claims 17 to 19, **characterized in that** by means of the sensor, heat of a cow can be ascertained.

21. A construction as claimed in any one of the preceding claims, **characterized in that** the milk box comprises a medical instrument (36) adapted to be folded in, by means of which the heartbeat, the temperature, the blood pressure, etc. of an animal can be measured in the milk box (2) and supplied to the computer.

22. A construction as claimed in any one of the preceding claims, **characterized in that** the construction comprises one or more sensors provided on the milk box (2), by means of which the physical state of the animal's legs is determined.

23. A construction as claimed in any one of the preceding claims, **characterized in that** the construction comprises a milking robot (6) for automatically connecting teat cups (8) to the teats of an animal to be milked.

24. Stable or cowshed (1) comprising a cubicle (4) having a flexible floor (46), **characterized in that**, said flexible floor (46) being provided with hollow spaces (32), said hollow spaces (32) being constituted by recesses at the lower side of the flexible floor (46).

25. Stable or cowshed (1) as claimed in claim 24, **characterized in that** the flexible floor (46) is supported against a metal plate (47).

26. Stable or cowshed (1) as claimed in claim 25, **characterized in that** the flexible floor (46) is glued to the metal plate (47).

27. Stable or cowshed (1) as claimed in claims 24 to 26, **characterized in that** the metal plate (47) is attached to the floor (49) of the stable or cowshed (1) by means of wire nails (48).

28. Stable or cowshed (1) as claimed in claims 24 to 27, **characterized in that** the flexible floor (46) is higher near the centre than near the edges.

## Patentansprüche

1. Anlage mit einer Vorrichtung zum Melken von Tieren, wie z. B. Kühen, die mit einer Melkbox (2) und einem Melkroboter (6) zum automatischen Anschließen der Zitzenbecher versehen ist, wobei die Melkbox (2) einen Boden (15) aufweist,
**dadurch gekennzeichnet, daß** der Boden (15) einen mit Hohlräumen (32) versehenen elastischen Boden (31) umfaßt, wobei die Hohlräume (32) durch Ausnehmungen an der Unterseite des elastischen Bodens (31) gebildet sind.

2. Anlage nach Anspruch 1,
**dadurch gekennzeichnet, daß** der elastische Boden (31) aus Gummi oder Kunststoff besteht.

3. Anlage nach Anspruch 1 oder 2,
**dadurch gekennzeichnet, daß** der elastische Boden (31) auf einer Metallplatte (33) abgestützt ist.

4. Anlage nach Anspruch 3,
**dadurch gekennzeichnet, daß** die Metallplatte (33) von einem Rahmen (35) umgeben ist.

5. Anlage nach einem der vorhergehenden Ansprüche,
**dadurch gekennzeichnet, daß** zumindest ein Teil des Bodens (15) in horizontaler Richtung und nach unten bewegbar ist.

6. Anlage nach Anspruch 5,
**dadurch gekennzeichnet, daß** der bewegliche Teil des Bodens (15) ein elastisches, motorisch antreibbares Förderband (16) umfaßt.

7. Anlage nach Anspruch 6,
**dadurch gekennzeichnet, daß** sich das Förderband (16) über die gesamte Länge und Breite der Melkbox (2) erstreckt.

8. Anlage nach einem der vorhergehenden Ansprüche,
**dadurch gekennzeichnet, daß** sie ein Kuhidentifikationssystem umfaßt, um das Vorhandensein oder Nichtvorhandensein eines Tieres auf dem Boden (15) festzustellen.

9. Anlage nach den Ansprüchen 6 und 8,
**dadurch gekennzeichnet, daß** ein Computer vorhanden ist, der ein Signal an den Motor gibt, um das Förderband in Gang zu setzen, wenn die Melkbox (2) leer ist.

10. Anlage nach Anspruch 5, 6, 7 oder 9,
**dadurch gekennzeichnet, daß** an einem Ende des beweglichen Bodens (15) ein Abfluß (29) angeordnet ist, von dem Verunreinigungen, wie z. B. Dung und Urin, aufgenommen werden können, die sich auf dem beweglichen Boden (15) befinden können.

11. Anlage nach Anspruch 10,
**dadurch gekennzeichnet, daß** nahe dem Ende, an dem der Abfluß (29) angeordnet ist, der bewegliche Boden (15) mit einem Abstreifer (24) versehen ist, um auf dem Boden (15) befindliche Verunreinigungen zu entfernen.

12. Anlage nach Anspruch 11,
**dadurch gekennzeichnet, daß** der Abstreifer (24) als motorisch antreibbare Schnecke ausgeführt ist.

13. Anlage nach einem der vorhergehenden Ansprüche, wobei die Anlage einen Trinkbehälter (14) umfaßt,
**dadurch gekennzeichnet, daß** der Trinkbehälter (14) eine Mischvorrichtung umfaßt, mittels der dem Trinkwasser beispielsweise Melassesirup zugesetzt werden kann.

14. Anlage nach einem der vorhergehenden Ansprüche, wobei die Anlage einen Futtertrog umfaßt,
**dadurch gekennzeichnet, daß** der Futtertrog eine Mischvorrichtung enthält, mittels der eine Substanz, wie z. B. Melassesirup, dem Kraftfutter zugesetzt werden kann.

15. Anlage nach einem der vorhergehenden Ansprüche,
**dadurch gekennzeichnet, daß** die Anlage eine Sprühvorrichtung umfaßt, mittels der warmes Wasser gegen die Beine des Tieres gesprüht wird.

16. Anlage nach einem der vorhergehenden Ansprüche,
**dadurch gekennzeichnet, daß** die Anlage ein Gebläse umfaßt, mittels dessen warme Luft gegen die Beine des Tieres geblasen werden kann.

17. Anlage nach einem der vorhergehenden Ansprüche,
**dadurch gekennzeichnet, daß** die Anlage einen oder mehrere Sensoren umfaßt, um das Verhalten des Tieres in der Melkbox zu überwachen.

18. Anlage nach Anspruch 17,
**dadurch gekennzeichnet, daß** der/die Sensor(en) an der Melkbox (2) angebracht ist/sind.

19. Anlage nach Anspruch 17 oder 18,
**dadurch gekennzeichnet, daß** der Sensor einen Aktivitätsmesser enthält.

20. Anlage nach einem der Ansprüche 17 bis 19,
**dadurch gekennzeichnet, daß** mittels des Sensors die Brunst einer Kuh festgestellt werden kann.

21. Anlage nach einem der vorhergehenden Ansprüche,
**dadurch gekennzeichnet, daß** die Melkbox ein nach innen klappbares medizinisches Gerät (36) umfaßt, mittels dessen der Herzschlag, die Temperatur, der Blutdruck, usw. eines Tieres in der Melkbox (2) gemessen und an den Computer geliefert werden können.

22. Anlage nach einem der vorhergehenden Ansprüche,
**dadurch gekennzeichnet, daß** die Anlage einen oder mehrere an der Melkbox (2) angebrachte Sensoren umfaßt, mit deren Hilfe der Gesundheitszustand der Beine des Tieres überprüft wird.

23. Anlage nach einem der vorhergehenden Ansprüche,
**dadurch gekennzeichnet, daß** die Anlage einen Melkroboter (6) zum automatischen Anschließen von Zitzenbechern (8) an die Zitzen eines zu melkenden Tieres umfaßt.

24. Stall oder Kuhstall (1) mit einer Box (4), die einen elastischen Boden (46) aufweist,
**dadurch gekennzeichnet, daß** der elastische Boden (46) mit Hohlräumen (32) versehen ist, wobei die Hohlräume (32) durch Ausnehmungen an der Unterseite des elastischen Bodens (46) gebildet sind.

25. Stall oder Kuhstall (1) nach Anspruch 24,
**dadurch gekennzeichnet, daß** der elastische Boden (46) auf einer Metallplatte (47) abgestützt ist.

26. Stall oder Kuhstall (1) nach Anspruch 25,
**dadurch gekennzeichnet, daß** der elastische Boden (46) auf die Metallplatte (47) aufgeklebt ist.

27. Stall oder Kuhstall (1) nach den Ansprüchen 24 bis 26,
**dadurch gekennzeichnet, daß** die Metallplatte (47) an dem Boden (49) des Stalles oder Kuhstalles (1) mittels Drahtstiften (48) befestigt ist.

28. Stall oder Kuhstall (1) nach den Ansprüchen 24 bis 27,
**dadurch gekennzeichnet, daß** der elastische Boden (46) nahe der Mitte höher ist als nahe den Rändern.

## Revendications

1. Installation comportant un système de traite d'animaux, tels que des vaches, muni d'un box de traite (2) et d'un robot de traite (6) afin de connecter automatiquement les gobelets trayeurs, le box de traite (2) comportant un plancher (15), **caractérisée en ce que** ledit plancher (15) comporte un plancher souple (31) muni d'espaces creux (32), lesdits espaces creux (32) étant constitués par des évidements situés au niveau du côté inférieur du plancher souple (31).

2. Installation selon la revendication 1, **caractérisée en ce que** le plancher souple (31) est fabriqué en caoutchouc ou en matériau synthétique.

3. Installation selon la revendication 1 ou 2, **caractérisée en ce que** le plancher souple (31) est supporté contre une plaque métallique (33).

4. Installation selon la revendication 3, **caractérisée en ce que** la plaque métallique (33) est entourée par un châssis (35).

5. Installation selon l'une quelconque des revendications précédentes, **caractérisée en ce qu'**au moins une partie du plancher (15) est mobile horizontalement et vers le bas.

6. Installation selon la revendication 5, **caractérisée en ce que** la partie mobile du plancher (15) constitue un convoyeur souple (16) pouvant être entraîné par moteur.

7. Installation selon la revendication 6, **caractérisée en ce que** le convoyeur (16) s'étend sur toute la longueur et la largeur du box de traite (2).

8. Installation selon l'une quelconque des revendications précédentes, **caractérisée en ce qu'**elle comporte un système d'identification de vache pour déterminer la présence ou l'absence d'un animal sur le plancher (15).

9. Installation selon les revendications 6 et 8, **caractérisée en ce qu'**un ordinateur est présent pour envoyer un signal au moteur afin de mettre le convoyeur en marche lorsque le box de traite (2) est vide.

10. Installation selon l'une quelconque des revendications 5, 6, 7 ou 9, **caractérisée en ce qu'**au niveau d'une première extrémité du plancher mobile (15), est agencée une évacuation (29) dans laquelle des contaminations peuvent être récupérées, telles que des bouses et de l'urine, qui peuvent être présentes sur le plancher mobile (15).

11. Installation selon la revendication 10, **caractérisée en ce qu'**à proximité de l'extrémité où l'évacuation 29 est située, le plancher mobile (15) est muni d'un racleur (24) destiné à enlever les contaminations présentes sur le plancher (15).

12. Installation selon la revendication 11, **caractérisée en ce que** le racleur (24) est conçu sous la forme d'une vrille pouvant être entraînée par un moteur.

13. Installation selon l'une quelconque des revendications précédentes, ladite installation comportant une auge de boisson (14), **caractérisée en ce que** l'auge de boisson (14) comporte un dispositif de mélange, par l'intermédiaire duquel par exemple de la mélasse peut être ajoutée à l'eau de boisson.

14. Installation selon l'une quelconque des revendications précédentes, ladite installation comportant une auge de fourrage, **caractérisée en ce que** ladite auge de fourrage comporte un dispositif de mélange, par l'intermédiaire duquel une substance, telle que de la mélasse, peut être ajoutée au fourrage concentré.

15. Installation selon l'une quelconque des revendications précédentes, **caractérisée en ce que** l'installation comporte un dispositif de pulvérisation, à l'aide duquel de l'eau chaude est pulvérisée contre les pattes de l'animal.

16. Installation selon l'une quelconque des revendications précédentes, **caractérisée en ce que** l'installation comporte un ventilateur, par l'intermédiaire duquel de l'air chaud peut être soufflé contre les pattes de l'animal.

17. Installation selon l'une quelconque des revendications précédentes, **caractérisée en ce que** l'installation comporte un ou plusieurs capteurs destinés à déterminer le comportement de l'animal dans le box de traite.

18. Installation selon la revendication 17, **caractérisée en ce que** le ou les capteurs est/sont agencés sur le box de traite (2).

19. Installation selon la revendication 17 ou 18, **caractérisée en ce que** le capteur comporte un dispositif de mesure d'activité.

20. Installation selon l'une quelconque des revendications 17 à 19, **caractérisée en ce que** par l'intermédiaire du capteur, on peut s'assurer de la chaleur d'une vache.

21. Installation selon l'une quelconque des revendications précédentes, **caractérisée en ce que** le box de traite comporte un instrument médical (36) adapté pour être plié, par l'intermédiaire duquel le pouls, la température, la pression sanguine, etc. d'un animal peuvent être mesurés dans le box de traite (2) et envoyés vers l'ordinateur.

22. Installation selon l'une quelconque des revendications précédentes, **caractérisée en ce que** l'installation comporte un ou plusieurs capteurs agencés sur le box de traite (2), par l'intermédiaire desquels l'état physique des pattes de l'animal est déterminé.

23. Installation selon l'une quelconque des revendications précédentes, **caractérisée en ce que** l'installation comporte un robot de traite (6) destiné à connecter automatiquement les gobelets trayeurs (8) aux trayons d'un animal à traire.

24. Etable ou hangar à vaches (1) comportant un compartiment (4) ayant un plancher souple (46), **caractérisé en ce que** ledit plancher souple (46) est muni d'espaces creux (32), lesdits espaces creux (32) étant constitués d'évidements situés au niveau du côté inférieur du plancher souple (46).

25. Etable ou hangar à vaches (1) selon la revendication 24, **caractérisé en ce que** le plancher souple (46) est supporté contre une plaque métallique (47).

26. Etable ou hangar à vaches (1) selon la revendication 25, **caractérisé en ce que** le plancher souple (46) est collé sur la plaque métallique (47).

27. Etable ou hangar à vaches (1) selon l'une quelconque des revendications 24 à 26, **caractérisé en ce que** la plaque métallique (47) est fixée sur le plancher (49) de l'étable ou du hangar à vaches (1) par l'intermédiaire de clous métalliques (48).

28. Etable ou hangar à vaches (1) selon l'une quelconque des revendications 24 à 27, **caractérisé en ce que** le plancher souple (46) est plus haut à proximité du centre qu'à proximité des bords.
